# EUROPÄISCHE PATENTANMELDUNG

(11) **EP 4 538 992 A1**
(43) Veröffentlichungstag der Anmeldung: **16.04.2025**
(21) Anmeldenummer: 23203480.1
(22) Anmeldetag: 13.10.2023
(51) Int. Cl.: G06V 10/82, B65G 1/04, G06N 3/02, G06V 20/56

(54) **SENSORANORDNUNG UND VERFAHREN ZUM BETRIEB EINER SENSORANORDNUNG**

(71) Anmelder: Leuze electronic GmbH + Co KG, 73277 Owen/Teck (DE)
(72) Erfinder: Marzani, Amirhossein, 73277 Owen/Teck (DE); Sanzi, Dr., Friedrich, 73230 Kirchheim/Teck (DE); Enzweiler, Prof. Dr. Markus, 75392 Deckenpfronn (DE); Köbel, Herbert, 73277 Owen/Teck (DE); Struckmeier, Anselm, 73277 Owen/Teck (DE)
(74) Vertreter: Ruckh, Rainer Gerhard

(57) **Zusammenfassung**

Die Erfindung betrifft eine Sensoranordnung (1) mit einem optischen Sensor (2), der als Empfänger einen Bildsensor (12) aufweist. Mit dem optischen Sensor (2) werden Marken (3) erfasst, die relativ zum optischen Sensor (2) beweglich angeordnet sind. Mit dem optischen Sensor (2) wird eine Positionsbestimmung einer von dieser erfassten Marke (3) durchgeführt. Der optische Sensor (2) weist eine Auswerteeinheit (15) auf, in welchem wenigstens ein Machine-Learning-Modell (16) vorhanden ist, mittels dessen eine in einem Bild des Bildsensors (12) vorhandene Marke (3) identifiziert wird. Die Lage der Marke (3) wird innerhalb des Bildes bestimmt, wobei die Lage der erfassten Marke (3) innerhalb des Bildes in der Auswerteeinheit (15) in Ortskoordinaten (x, y) umgerechnet wird. Die Ortskoordinaten (x, y) oder reale Ortsgrößen werden vom optischen Sensor (2) als Ausgangsgrößen an eine externe Einheit ausgegeben.

## Beschreibung

Die Erfindung betrifft eine Sensoranordnung und ein Verfahren zum Betrieb einer Sensoranordnung.

Derartige Sensoranordnungen werden zu Positionierungsaufgaben eingesetzt. Ein typisches Anwendungsbeispiel aus dem Bereich der Förder- und Lagertechnik ist die Positionierung von Regalbediengeräten an stationär angeordneten Regalen, damit mit einem Lastaufnahmemittel des Regalbediengeräts Lagergut in den Regalen eingelagert oder aus diesem entnommen werden kann.

Für eine Positionierung, insbesondere für eine Feinpositionierung des Regalbediengeräts ist auf diesem ein optischer Sensor installiert, der als Empfänger einen Bildsensor aufweist, d.h. der optische Sensor bildet ein kamerabasiertes System.

In Riegeln von Regalen oder allgemein Rahmenkonstruktionen von Regalen sind Marken in Form von Löchern mit bestimmten Geometrien oder in Form von Reflektoren vorhanden.

Das Regalbediengerät wird an das zu bedienende Regal angefahren, wobei das Regalbediengerät hierzu eine Steuerung aufweist, wobei zur Feinpositionierung mit dem optischen Sensor die jeweilige Marke erfasst wird. Da die Position des optischen Sensors auf dem Regalbediengerät bekannt ist, kann durch Bestimmung der Lage innerhalb eines Bilds des Bildsensors ein Positionierungssignal für das Regalbediengerät gewonnen werden, d.h. die Lage einer detektierten Marke innerhalb eines Bildsensors liefert ein Maß dafür, ob und wie weit das Regalbediengerät von seiner Sollposition am Regal entfernt ist.

Der Bildsensor des optischen Sensors weist typischerweise eine matrixförmige Anordnung von Empfangselementen, d.h. Pixeln auf, wobei bei einer Bildaufnahme jedes Pixels einen Helligkeitswert besitzt, d.h. der Bildsensor generiert Grauwertbilder.

Ein bekanntes Verfahren um eine Marke in dem Grauwertbild zu erkennen, ist das Template-Matching. Ein vorgegebenes Template, d.h. eine dunkle Marke in Form eines Lochs oder eine helle Marke in Form eines Reflektors, die eine bestimmte, vorgegebene Größe und Geometrie aufweist, wird horizontal und vertikal über ein mit dem Bildsensor aufgenommenes Bild geschoben. In dem Ausschnitt des Bilds in dem eine hohe Korrelation der Grauwerte mit dem Template vorliegt, wird die Marke vermutet. Aus der so ermittelbaren Lage der Marke im Bild können die Koordinaten der Marke (in der Ebene des Bildsensors) geschätzt werden.

Diese Methode der Positionsbestimmung ist empfindlich gegen Störeinflüsse wie problematischen Beleuchtungssituationen oder störenden Hintergrundeinflüssen bei der Bildaufnahme.

Weiterhin ist es bekannt, Marken in Bildern des Bildsensors unter Verwendung der Circle-Hough-Transformation zu erkennen. Bei diesem Verfahren wird zunächst das Grauwertbild des Bildsensors in ein Kantenbild transformiert, wobei dann auf das Kantenbild die Circle-Hough-Transformation angewendet wird, mit der beispielsweise der Mittelpunkt einer kreisförmigen Marke bestimmt wird.

Auch dieses Verfahren ist empfindlich gegen optische Störeinflüsse, wie problematischen Beleuchtungssituationen oder Hintergrundeffekten und insbesondere gegenüber Störrauschen wie z.B. eines additiven Gaußschen Rauschens bezüglich der Grauwerte der Pixel, welches bei der Bildaufnahme mit dem Bildsensor entsteht.

Der Erfindung liegt die Aufgabe zugrunde eine Sensoranordnung der eingangs genannten Art bereitzustellen mittels derer eine schnelle, sichere und zuverlässige Positionsbestimmung von Marken durchführbar ist.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft eine Sensoranordnung mit einem optischen Sensor, der als Empfänger einen Bildsensor aufweist. Mit dem optischen Sensor werden Marken erfasst, die relativ zum optischen Sensor beweglich angeordnet sind. Mit dem optischen Sensor wird eine Positionsbestimmung einer von dieser erfassten Marke durchgeführt. Der optische Sensor weist eine Auswerteeinheit auf, in welchem wenigstens ein Machine-Learning-Modell vorhanden ist, mittels dessen eine in einem Bild des Bildsensors vorhandene Marke identifiziert wird. Die Lage der Marke wird innerhalb des Bildes bestimmt, wobei die Lage der erfassten Marke innerhalb des Bildes in der Auswerteeinheit in Ortskoordinaten umgerechnet wird. Die Ortskoordinaten oder reale Ortsgrößen werden vom optischen Sensor als Ausgangsgrößen an eine externe Einheit ausgegeben.

Die Erfindung betrifft weiterhin ein entsprechendes Verfahren.

Der Grundgedanke der Erfindung besteht darin, dass der optische Sensor der erfindungsgemäßen Sensoranordnung eine Auswerteeinheit mit einem Machine-Learning-Modell aufweist.

Das Machine-Learning-Modell bildet ein selbstlernendes System mit dem eine Anpassung des optischen Sensors an unterschiedliche Applikationsbedingungen, insbesondere auch an unterschiedliche zu detektierende Marken möglich ist. Zudem wird eine verbesserte Störungsempfindlichkeit gegen Störeinflüsse erzielt, wie z.B. problematische Beleuchtungssituationen oder störende Hintergrundeffekte.

Dadurch ist es möglich auch bei Vorhandensein von Störeinflüssen Marken in Bildern des Bildsensors sicher, d.h. mit geringen Fehlerraten zu identifizieren und innerhalb des Bildes zu lokalisieren.

Dies führt wiederum zu hohen Detektionsraten, da nur in vereinzelten Bildern keine sichere Markendetektion möglich ist.

Somit wird mit dem optischen Sensor der erfindungsgemäßen Sensoranordnung eine schnelle und sicher Detektion von Marken gewährleistet. Weiterhin wird eine zuverlässige Koordinatenschätzung von Marken anhand der Bilder des Bildsensors des optischen Sensors gewährleistet.

Die erfindungsgemäße Sensoranordnung wird generell für Positionierungsaufgaben eingesetzt.

Besonders vorteilhaft ist der optische Sensor auf einem Regalbediengerät angeordnet. Das Regalbediengerät weist ein Lastaufnahmemittel auf, welches abhängig von den vom optischen Sensor ausgegebenen Ortskoordinate gesteuert wird.

Dabei werden mit dem Lastaufnahmemittel Positionen an mit Marken gekennzeichneten Regalen angefahren. Die Marken werden mit dem optischen Sensor erfasst. Abhängig von mit dem vom optischen Sensor ausgegebenen Ortskoordinaten wird das Lastaufnahmemittel an den Regalen positioniert.

Das Regalbediengerät weist eine Steuerung auf, die einen Motor ansteuert, der die Fahrbewegungen des Regalbediengeräts und die Zustellbewegungen des Lastaufnahmemittels durchführt um Lagergüter in den Regalen einzulagern oder aus diesen zu entnehmen.

Die im optischen Sensor bestimmten Ortskoordinaten einer Marke werden an die Steuerung des Regalbediengeräts ausgegeben. In Abhängigkeit hiervon steuert die Steuerung den Motor an, um so das Lastaufnahmemittel in seine Sollposition am Regal einzufahren.

Vorteilhaft sind die Marken von geometrischen Strukturen an den Regalen gebildet.

Insbesondere sind die geometrischen Strukturen Reflektoren oder Löcher.

Die Marken sind insbesondere an Rahmenkonstruktionen wie Riegeln der Regale angebracht. Marken in Form von Löchern setzen sich als dunkle geometrische Strukturen von der Rahmenkonstruktion der Regale ab, während Marken in Form von Reflektoren sich als helle geometrische Strukturen von der Rahmenkonstruktion absetzen. Die geometrischen Strukturen können in Form von Kreisen, Ellipsen, Sternen, Reflektoren, Vielecken und dergleichen ausgebildet sein.

Gemäß einer vorteilhaften Ausführungsform weist das Machine-Learning-Modell des optischen Sensors wenigstens ein neuronales Netz auf, welches in einem Einlernbetrieb mit Trainingsdaten trainiert wird.

Dabei enthalten die Trainingsdaten Eingangsdaten in Form von mit dem optischen Sensor gemessenen Bildern oder simulierten Bildern und Soll-Ausgangsdaten. Das Training erfolgt durch eine zu minimierende Verlustfunktion.

Die Bestimmung der Trainingsdaten erfolgt vor Aufnahme des Arbeitsbetriebs der Sensoranordnung in einem Einlernbetrieb. Durch die Erzeugung von Trainingsdaten in Form von simulierten Bildern oder realen Bildern, die mit dem Bildsensor des optischen Sensors aufgenommen werden, kann das Training des neuronalen Netzes so durchgeführt werden, dass eine Anpassung an die jeweiligen Umgebungsbedingungen erfolgt. Dabei ist auch eine Anpassung an schwierige Umgebungsbedingungen möglich, wie z.B. schlechte Beleuchtungsverhältnisse, Störungen im Hintergrund, Kontrastveränderungen innerhalb der zu detektierenden Marken, partielle Verdeckungen der Marke oder Störrauschen. Weiterhin ist durch das Training des neuronalen Netzes auch eine Anpassung an die jeweilige Applikation der Sensoranordnung bzw. des optischen Sensors möglich.

Bei dem Training des neuronalen Netzes werden die Eingangsdaten verwendet und zugleich definierte Soll-Ausgangsdaten vorgegeben, wodurch Sollwerte für das Training und den Lernprozess des neuronalen Netzes definiert werden.

Die Soll-Ausgangsdaten können von Koordinaten der Marke in der Ebene des Bildsensors, d.h. zweidimensionale Koordination x, y gebildet sein. Auch kann eine Feature Map, z.B. in Form eines gewünschten Grauwertbild des Sensors mit einem Extremwert am Ort der Marke vorgegeben werden. Weitere Soll-Ausgangsdaten können Informationen über die Anzahl und Positionen von Marken sein.

Gemäß einer ersten Variante weist das Machine-Learning-Modell ein neuronales Netz auf, das für mehrere unterschiedliche Marken trainiert wird.

In diesem Fall wird das neuronale Netz des Machine-Learning-Modells für mehrere Markentypen trainiert, beispielsweise für kreisförmige Marken mit unterschiedlichen Radien. Auch kann das neuronale Netz für Marken mit unterschiedlichen Geometrien (kreisförmig, rechteckig und dergleichen) trainiert werden.

Gemäß einer zweiten Variante weist das Machine-Learning-Modell mehrere neuronale Netze auf, die für unterschiedliche Marken trainiert werden. Die einzelnen neuronalen Netze sind in der Auswerteeinheit abgespeichert und auswählbar.

Beispielsweise können unterschiedliche neuronale Netze für kreisförmige Marken mit unterschiedlichen Radien trainiert werden. Jedes neuronale Netz wird dann für einen bestimmten Radiusbereich eingelernt, wobei die Radiusbereiche für die unterschiedlichen neuronalen Netze überlappen können. Weiterhin können unterschiedliche neuronale Netze für Marken mit unterschiedlichen Geometrien eingelernt werden.

In diesem Fall sind die trainierten neuronalen Netze in der Auswerteeinheit hinterlegt und können in einem Parametrier- bzw. Konfiguriervorgang applikationsspezifisch ausgewählt werden, wobei der optische Sensor hierzu eine geeignete Benutzerschnittstelle aufweist.

Gemäß einer vorteilhaften Ausführungsform umfasst das Machine-Learning-Modell eine Netzstruktur von neuronalen Netzen.

Beispielsweise weist die Netzstruktur ein CNN (convolutional neuronal network) und ein FCN (fully connected network) auf.

Bei dem CNN handelt es sich um ein Faltungsnetz, in dem Operationen wie Faltungen, Max Pooling, Aktivierungsfunktionen oder Normalisierungen durchgeführt werden, wobei hierzu unterschiedliche Schichten im CNN vorgesehen sind. Pooling-Operationen dienen zur Reduzierung der Größen von Bildern unter Erhaltung wesentlicher Bildmerkmale, d.h. mit einem Max Pooling wird die Auflösung von Bildern reduziert. Bei dem FCN handelt es sich um ein neuronales Netz mit vollverbundenen Schichten ohne Faltungsschichten. Auch das FCN kann Aktivierungsfunktionen und Normalisierungsschichten aufweisen.

Gemäß einem weiteren Beispiel weist die Netzstruktur zwei in einer Reihenanordnung angeordnete CNN auf, wobei der Ausgang des zweiten CNN auf einen Entscheider geführt ist. Auch der Entscheider kann ein neuronales Netz sein.

Der Entscheider entscheidet anhand vom zweiten CNN ausgegebener Größen wie viele Marken in einem Bild vorhanden sind und an welcher Position sich diese befinden.

Gemäß einem weiteren Beispiel weist die Netzstruktur ein erstes CNN auf. Ein erster Ausgang des ersten CNN ist auf ein zweites CNN geführt, dessen Ausgang auf eine DSTN-Schicht (differentiable spatio-transform neural network) geführt ist, und wobei ein zweiter Ausgang des ersten CNN auf ein FCN geführt ist.

Die DSTN-Schicht ist ein neuronales Netz, das anhand der vom zweiten CNN ausgegebener Größen die Positionen von Marken in einem Bild des Bildsensors berechnet.

Vorteilhaft ist das oder jedes Machine-Learning-Modell in Form von Softwaremodulen ausgebildet. Die Auswerteeinheit weist zweckmäßig eine an die Machine-Learning-Modelle angepasste Prozessorstruktur auf.

Zur Erstellung der Softwaremodule kann als Programmiersprache Python, als Entwicklungsumgebung Jupytor Lab und als Framework Tensorflow und Py Torch genutzt werden.

Die an das Machine-Learning-Modell angepasste Prozessorstruktur kann insbesondere in Form von Neuronal Processing Units (NPU) gebildet sein. Generell können auch Prozessoren wie CPU, GPU, FPGA und ASIC eingesetzt werden.

Die Erfindung wird im Folgenden anhand der Zeichnungen erläutert. Es zeigen:
- Figur 1:: Ausführungsbeispiel der erfindungsgemäßen Sensoranordnung.
- Figur 2:: Ausführungsbeispiel eines optischen Sensors der Sensoranordnung gemäß Figur 1.
- Figur 3:: Anordnung eines Bildsensors und eines Machine-Learning-Modells des optischen Sensors gemäß Figur 2.
- Figur 4:: Erstes Beispiel einer Netzstruktur von neuronalen Netzen des Machine-Learning-Modells gemäß Figur 3.
- Figur 5:: Zweites Beispiel einer Netzstruktur von neuronalen Netzen des Machine-Learning-Modells gemäß Figur 3.
- Figur 6:: Drittes Beispiel einer Netzstruktur von neuronalen Netzen des Machine-Learning-Modells gemäß Figur 3.

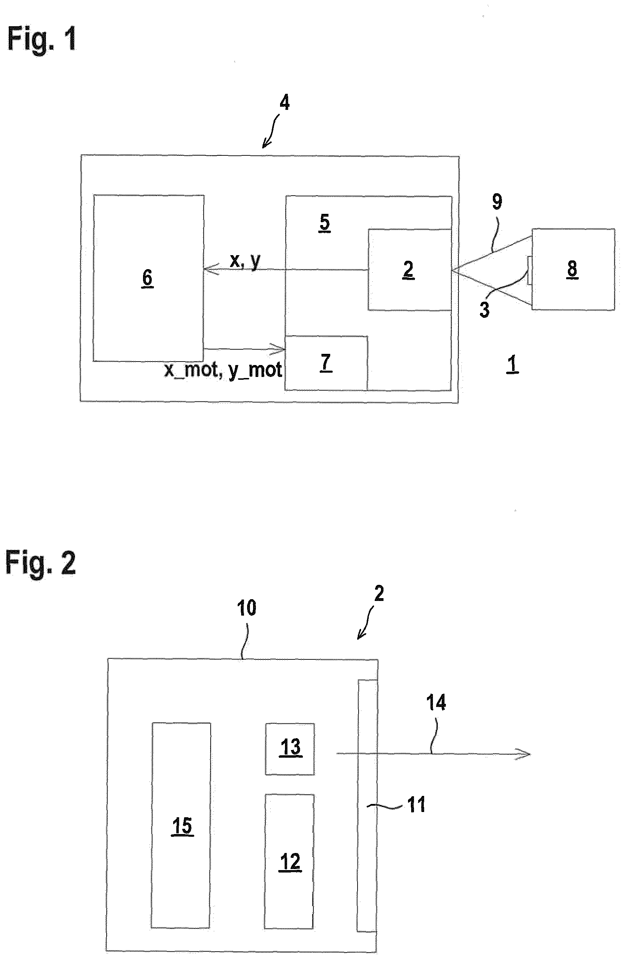

Figur 1 zeigt schematisch ein Ausführungsbeispiel der erfindungsgemäßen Sensoranordnung 1 mit einem optischen Sensor 2, der zur Detektion von Marken 3 ausgebildet ist.

Die Sensoranordnung 1 bildet generell ein Positionierungssystem. Im vorliegenden Fall ist der optische Sensor 2 in einer festen Einbauposition auf einem Regalbediengerät 4 installiert. Das Regalbediengerät 4 ist ein Fahrzeug mit einem Lastaufnahmemittel 5 in Form einer Gabel und dergleichen. Das Regalbediengerät 4 weist eine Steuerung 6 auf, die einen Motor 7, insbesondere einen elektrischen Antrieb steuert, wodurch das Regalbediengerät 4 Fahrbewegungen und das Lastaufnahmemittel 5 Zustellbewegungen ausführt.

Das Regalbediengerät 4 wird an einem Regal 8 positioniert, so dass mit dem Lastaufnahmemittel 5 Lagergüter in den Regalen 8 eingelagert bzw. aus diesem ausgelagert werden können.

Die Regale 8 sind mit Marken 3 gekennzeichnet, die vom optischen Sensor 2 erfasst werden können. Figur 1 zeigt eine solche Marke 3 im Sichtfeld 9 des optischen Sensors 2.

Die Marken 3 sind von definierten geometrischen Strukturen gebildet.

Die Marken 3 sind insbesondere an Rahmenkonstruktionen wie Riegeln der Regale 8 angebracht. Marken 3 in Form von Löchern setzen sich als dunkle, geometrische Strukturen von der Rahmenkonstruktion der Regale 8 ab, während Marken 3 in Form von Reflektoren sich als helle geometrische Strukturen an der Rahmenkonstruktion absetzen. Die geometrischen Strukturen können in Form von Kreisen, Ellipsen, Reflektoren, Vielecken und dergleichen ausgebildet sein.

Figur 2 zeigt ein Ausführungsbeispiel des optischen Sensors 2 der erfindungsgemäßen Sensoranordnung 1. Die Komponenten des optischen Sensors 2 sind in einem Gehäuse 10 integriert, in dessen Frontwand eine transparente Frontscheibe 11 vorhanden ist. Der optische Sensor 2 weist als Empfänger einen Bildsensor 12 auf, der eine matrixförmige Anordnung von lichtempfindlichen Empfangselementen, d.h. Pixeln aufweist. Beispielweise kann der Bildsensor 12 in Form eines CMOS-Arrays oder CCD-Arrays ausgebildet sein.

Dem Empfänger ist einer Sendereinheit 13 zugeordnet, die Lichtstrahlen 14 emittiert und so eine Beleuchtungseinheit für den Bildsensor 12 bildet. Die Lichtstrahlen 14 werden durch die Frontscheibe 11 geführt. Von einer Marke 3 reflektierendes Licht wird durch die Frontscheibe 11 zum Bildsensor 12 geführt, falls sich die Marke 3 im Sichtfeld 9 des Bildsensors 12 befindet.

Entsprechend dem Kontraststruktur der Marke 3 registrieren für die Pixel Helligkeitswerte. Damit werden mit dem Bildsensor 12 Bilder in Form von Grauwertbildern erhalten. Die Bilder des Bildsensors 12 werden in einer Auswerteeinheit 15 des optischen Sensors 2 ausgewertet.

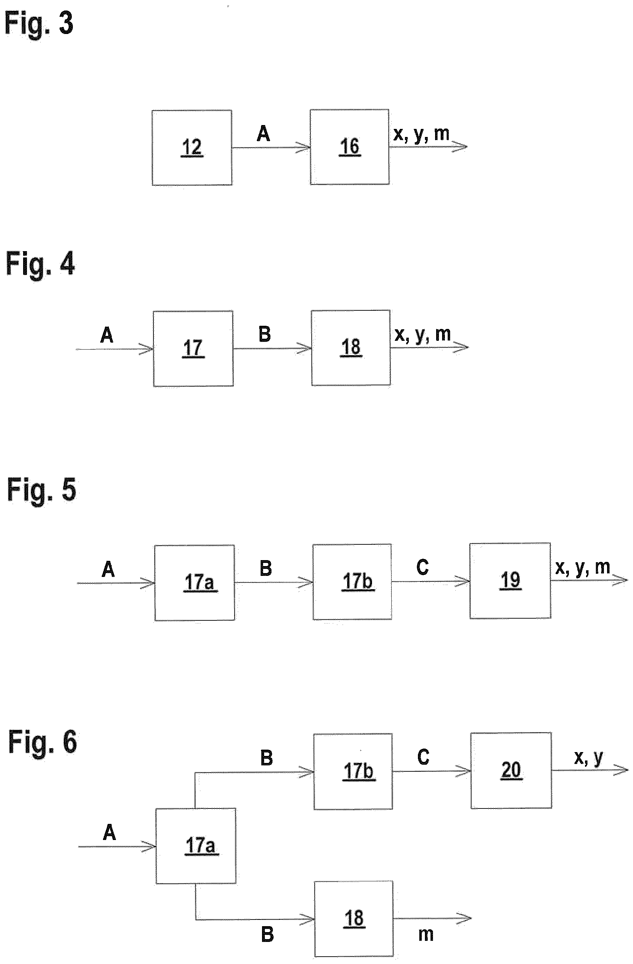

Die Auswerteeinheit 15 weist eine Prozessorstruktur auf, auf der ein Machine-Learning-Modell 16 in Form von Softwaremodulen implementiert ist (Figur 3). Die Prozessorstruktur ist an das Machine-Learning-Modell 16 angepasst und ist vorteilhaft durch eine NPU abgebildet.

Die Bildauswertung mit dem Machine-Learning-Modell 16 erfolgt derart, dass die Lage wenigstens einer Marke 3 in einem Bild des Bildsensors 12 ermittelt wird. Hierzu wird das aktuelle Pixelbild A, d.h. das Grauwertbild des Bildsensors 12 dem Machine-Learning-Modell 16 zugeführt. Der Index m in Figur 3 gibt an, wieviele Marken 3 in einem Bild identifiziert werden konnten. Aus der Lage einer erfassten Marke 3 im Bild werden in dem Machine-Learning-Modell 16 die Ortskoordinaten x, y der Marke 3 in der Bildebene des Bilds berechnet und diese bzw. reale Ortsgrößen der Marke 3 als Ausgangsgrößen des optischen Sensors 2 an die Steuerung 6 des Regalbediengeräts 4 ausgegeben. Die Steuerung 6 nimmt anhand einer bekannten Lage eines Regals 8 eine Grobpositionierung des Regalbediengeräts 4 vor. Anhand der im optischen Sensor 2 bestimmten Ortskoordinaten x, y der Marke 3 nimmt dann die Steuerung 6 eine Feinpositionierung des Regalbediengeräts 4 bzw. dessen Lastaufnahmemittel 5 am Regal 8 vor, in dem sie entsprechende Steuergrößen x ₘₒₜ, y ₘₒₜ an den Motor 7 ausgibt (Figur 1).

Das in Figur 3 dargestellte Machine-Learning-Modell 16 weist wenigstens ein neuronales Netz auf, welches in einem Einlernbetrieb mit Trainingsdaten trainiert wird.

Dabei enthalten die Trainingsdaten Eingangsdaten in Form von mit dem optischen Sensor 2 gemessenen Bildern oder simulierten Bildern und Soll-Ausgangsdaten. Das Training erfolgt durch eine zu minimierende Verlustfunktion.

Die Bestimmung der Trainingsdaten erfolgt vor Aufnahme des Arbeitsbetriebs der Sensoranordnung 1 in einem Einlernbetrieb. Durch die Erzeugung von Trainingsdaten in Form von simulierten Bildern oder realen Bildern, die mit dem Bildsensor 12 des optischen Sensors 2 aufgenommen werden, kann das Training des neuronalen Netzes so durchgeführt werden, dass eine Anpassung an die jeweiligen Umgebungsbedingungen erfolgt. Dabei ist durch eine Verwendung einer großen Anzahl an Trainingsdaten auch eine Anpassung an schwierige Umgebungsbedingungen möglich, wie z.B. schlechte Beleuchtungsverhältnisse, Störungen im Hintergrund, Kontrastveränderungen innerhalb der zu detektierenden Marken 3, partielle Verdeckungen der Marke 3 oder Störrauschen.

Weiterhin ist durch das Training des neuronalen Netzes auch eine Anpassung an die jeweilige Applikation der Sensoranordnung 1 bzw. des optischen Sensors 2 möglich.

Bei dem Training des neuronalen Netzes werden die Eingangsdaten verwendet und zugleich definierte Soll-Ausgangsdaten vorgegeben, wodurch Sollwerte für das Training und den Lernprozess des neuronalen Netzes definiert werden.

Die Soll-Ausgangsdaten können von Koordination der Marke 3 in der Ebene des Bildsensors 12, d.h. zweidimensionale Koordination x, y gebildet sein. Auch kam eine Feature Map, z.B. in Form eines gewünschten Grauwertbild des Sensors mit einem Extremwert am Ort der Marke 3 vorgegeben werden.

Gemäß einer ersten Variante weist das Machine-Learning-Modell 16 ein neuronales Netz auf, das für mehrere unterschiedliche Marken 3 trainiert wird.

In diesem Fall wird das neuronale Netz des Machine-Learning-Modells 16 für mehrere Markentypen trainiert, beispielsweise für kreisförmige Marken 3 mit unterschiedlichen Radien. Auch kann das neuronale Netz für Marken 3 mit unterschiedlichen Geometrien (kreisförmig, rechteckig und dergleichen) trainiert werden.

Gemäß einer zweiten Variante weist das Machine-Learning-Modell 16 mehrere neuronale Netze auf, die für unterschiedliche Marken 3 trainiert werden. Die einzelnen neuronalen Netze sind in der Auswerteeinheit 15 abgespeichert und auswählbar.

Beispielsweise können unterschiedliche neuronale Netze für kreisförmige Marken 3 mit unterschiedlichen Radien trainiert werden. Jedes neuronale Netz wird dann für einen bestimmten Radiusbereich eingelernt, wobei die Radiusbereiche für die unterschiedliche neuronalen Netze überlappen können. Weiterhin können unterschiedliche neuronale Netze für Marken 3 mit unterschiedlichen Geometrien eingelernt werden.

In diesem Fall sind die trainierten neuronalen Netze in der Auswerteeinheit 15 hinterlegt und können in einem Parameter- bzw. Konfiguriervorgang applikationsspezifisch ausgewählt werden, wobei der optische Sensor 2 hierzu eine geeignete Benutzerschnittstelle aufweist.

Das Machine-Learning-Modell 16 besteht vorteilhaft aus einer Netzstruktur von neuronalen Netzen.

Die Figuren 4 bis 6 zeigen unterschiedliche Ausführungsformen derartiger Netzstrukturen.

Bei dem Ausführungsbeispiel gemäß Figur 4 weist die Netzstruktur ein CNN 17 (convolutional neuronal network) und ein FCN 18 (fully connected network) auf.

Bei dem CNN 17 handelt es sich um ein Faltungsnetz, in dem Operationen wie Faltungen, Max Pooling, Aktivierungsfunktionen oder Normalisierungen durchgeführt werden, wobei hierzu unterschiedliche Schichten im CNN 17 vorgesehen sind. Pooling-Operationen dienen zur Reduzierung der Größen von Bildern des Bildsensors 12 unter Erhaltung wesentlicher Bildmerkmale, d.h. mit einem Max Pooling wird die Auflösung von Bildern reduziert.

Das CNN 17 besteht aus mehreren Faltungsschichten. Die jeweiligen Eingangsdaten einer Faltungsschicht werden mit Filterkernels verarbeitet. Ein derartiger Filterkernel wird über ein Bild des Bildsensors 12, das Eingangsdaten bildet, geschoben und dabei wird das Skalarprodukt des Filterkernels mit dem aktuell unterliegenden Bildausschnitt gebildet.

Das CNN 17 generiert als Ausgabegrößen B Feature Maps. Die Feature Maps entsprechen Grauwertbildern, bei denen spezifische Merkmale, insbesondere Merkmale von Marken 3 hervorgehoben sind.

Diese Ausgangsgrößen werden dem FCN 18 zugeführt.

Bei dem FCN 18 handelt es sich um ein neuronales Netz mit vollverbundenen Schichten ohne Faltungsschichten. Auch das FCN 18 kann Aktivierungsfunktionen und Normalisierungsschichten aufweisen.

Das FCN 18 weist mehrere Schichten auf, wobei Neuronen einer Schicht mit den Neuronen der vorigen Schicht verknüpft sind, d.h. jedes Neuron einer Schicht besitzt eine Verbindung zu allen Neuronen der vorigen Schichten.

Mit dem FCN 18 wird als Ergebnis der Auswertung der Index m berechnet, der angibt, ob in einem Bild des Bildsensors 12 eine Marke 3 vorhanden ist. Zudem werden die Ortskoordinaten x, y der Marke 3 im Bild berechnet.

Bei der Ausführungsform der Figur 5 weist die Netzstruktur des Machine-Learning-Modells 16 zwei in Reihe angeordnete CNN 17a, 17b auf, wobei der Ausgang des zweiten CNN 17b auf einem Entscheider 19 geführt ist, der auch ein neuronales Netz sein kann.

Das Pixelbild A des Bildsensors 12 wird dem ersten CNN 17a zugeführt, das ein reines Faltungsnetz ist. Im ersten CNN 17a werden Feature Maps generiert, die als Ausgabegrößen B dem zweiten CNN 17b zugeführt werden. Auch das zweite CNN 17b ist ein reines Faltungsnetz.

Im vorliegenden Fall wird im ersten CNN 17a durch Max Pooling Operationen die Auflösung der Bilder des Bildsensors 12 reduziert. Im zweiten CNN 17b wird die Auflösung der Bilder durch Upsampling- oder Transposed-Convolution-Operationen wieder erhöht. Das erste CNN 17a kann damit als Eincoder, der zweite CNN 17b als Decoder aufgefasst werden.

Am Ausgang des zweiten CNN 17b liegt als Ausgabegröße C eine Feature Map an, die als Grauwertbild interpretierbar ist. Die Pixel der Feature Map können als Neuronen angesehen werden, wobei jedes Neuron eine gewisse Aktivierung beinhaltet und eine Position repräsentiert.

Diese Feature Map entspricht dann einer Probability Map, wobei aus den Aktivierungen der einzelnen Neuronen/Pixel auf Wahrscheinlichkeit geschlossen werden kann, mit der sich die Marke 3 an unterschiedlichen Positionen im Pixelbild A befindet. Diese Feature Map wird zum Entscheider 19 gesendet. Der Entscheider 19 entscheidet anhand der Aktivierungen der einzelnen Neuronen aus C, an welcher Position x, y sich eine Marke 3 befinden kann bzw. wie viele Marken 3 sich auf dem Pixelbild A befinden (m). Während des Trainings wird für die Feature Maps der Soll-Ausgang vorgegeben. Dieser entspricht z.B. einer 2D-Gaußglocke, deren Mittelwert sich an der Soll-Position der Marke 3 befindet. Der Entscheider 19 wird erst nach dem Training eingesetzt.

Bei dem Ausführungsbeispiel gemäß Figur 6 weist die Netzstruktur ein erstes CNN 17a auf. Ein erster Ausgang des ersten CNN 17a ist auf ein zweites CNN 17b geführt, dessen Ausgang auf eine DSTN-Schicht 20 (differentiable spatio-transform neural network) geführt ist, und wobei ein zweiter Ausgang des ersten CNN 17a auf ein FCN 18 geführt ist.

Aus dem Pixelbild A des Bildsensors 12 generiert das erste CNN 17a eine Feature Map, die als Ausgabegröße B dem zweiten CNN 17b und auch dem FCN 18 zugeführt wird.

Das zweite CNN 17b entspricht hinsichtlich seiner Funktion dem CNN 17b gemäß Figur 5.

Am Ausgang des zweiten CNN 17b liegt als Ausgabegröße B eine Feature Map an, die als Grauwertbild interpretiert werden kann. Die Grauwerte entsprechen den Aktivierungen der jeweiligen Neuronen dieses neuronalen Netzes und jedes Neuron repräsentiert eine Position. Die im CNN 17b generierte Ausgabegröße B wird der DSTN-Schicht 20 zugeführt, die ein weiteres neuronales Netz bildet. Die DSTN-Schicht 20 berechnet aus der Ausgabegröße B die Position x, y, d.h. die Ortskoordinate x, y der Marke 3.

Im unteren Pfad der zweikanaligen Netzstruktur gemäß Figur 6 wird die Ausgabegröße B an das FCN 18 gesendet. Das FCN 18 ist darauf trainiert, den Index m so zu bestimmen, d.h. zu bestimmen, wieviele Marken 3 sich im Pixelbild A befinden.

Um die o.g. Netzstrukturen besonders recheneffizient einzusetzen, können nach oder während des Trainings und vor dem Einsatz der neuronalen Netze Optimierungen vorgenommen werden (Quantisierung, Festkommaarithmetik anstatt Gleitkommaarithmetik, Layer Fusion, Pruning und weitere bei neuronalen Netzen typische Ansätze, um die Rechenzeit und Größe zu reduzieren.) Durch Layer Fusion und Pruning wird die Komplexität der neuronalen Netze reduziert, d.h. die Anzahl der benötigten Multiplikationen verringert sich. Durch Quantisierung und die Verwendung von Festkommaarithmetik wird eine schnellere Ausführung der Operationen erzielt und zusätzlich verringert sich der Speicherbedarf für die Netzparameter der neuronalen Netze.

Darüber hinaus ist es möglich, dass die neuronalen Netze an die Applikation angepasst werden. Dazu müssten Bilder in der Applikation aufgenommen und die zugehörigen Soll-Ausgangsdaten (x, y und m) erfasst werden. Mit Hilfe dieser Daten ist eine Optimierung der Netze durch weiteres Training möglich, so dass neue Netzparameter ermittelt werden. Dieses Training kann dabei entweder auf dem optischen Sensor 2 direkt oder in einer Cloud erfolgen.

### Bezugszeichenliste

- (1): Sensoranordnung
- (2): optischer Sensor
- (3): Marke
- (4): Regalbediengerät
- (5): Lastaufnahmemittel
- (6): Steuerung
- (7): Motor
- (8): Regal
- (9): Sichtfeld
- (10): Gehäuse
- (11): Frontscheibe
- (12): Bildsensor
- (13): Sendereinheit
- (14): Lichtstrahlen
- (15): Auswerteeinheit
- (16): Machine-Learning-Modell
- (17, 17a, 17b): CNN (convolutional neuronal network)
- (18): FCN (fully connected network)
- (19): Entscheider
- (20): DSTN-Schicht (differentiable spatio-transform neural network)

- (A): Pixelbild
- (B, C): Ausgabegröße
- (m): Index
- (x, y): Ortskoordinate

## Patentansprüche

1. Sensoranordnung (1) mit einem optischen Sensor (2), der als Empfänger einen Bildsensor (12) aufweist, wobei mit dem optischen Sensor (2) Marken (3) erfasst werden, die relativ zum optischen Sensor (2) beweglich angeordnet sind, wobei mit dem optischen Sensor (2) eine Positionsbestimmung einer von dieser erfassten Marke (3) durchgeführt wird, **dadurch gekennzeichnet, dass** der optische Sensor (2) eine Auswerteeinheit (15) aufweist, in welchem wenigstens ein Machine-Learning-Modell (16) vorhanden ist, mittels dessen eine in einem Bild des Bildsensors (12) vorhandene Marke (3) identifiziert wird und die Lage der Marke (3) innerhalb des Bildes bestimmt wird, und wobei die Lage der erfassten Marke (3) innerhalb des Bildes in der Auswerteeinheit (15) in Ortskoordinaten (x, y) umgerechnet wird, und dass die Ortskoordinaten (x, y) oder reale Ortsgrößen vom optischen Sensor (2) als Ausgangsgrößen an eine externe Einheit ausgegeben werden.

2. Sensoranordnung (1) nach Anspruch 1, **dadurch gekennzeichnet, dass** der optische Sensor (2) auf einem Regalbediengerät (4) angeordnet ist, wobei das Regalbediengerät (4) ein Lastaufnahmemittel (5) aufweist, welches abhängig von den vom optischen Sensor (2) ausgegebenen Ortskoordinaten (x, y) oder realen Ortsgrößen gesteuert wird.

3. Sensoranordnung (1) nach Anspruch 2, **dadurch gekennzeichnet, dass** mit dem Lastaufnahmemittel (5) Positionen an mit Marken (3) gekennzeichneten Regalen (8) angefahren werden, wobei die Marken (3) mit dem optischen Sensor (2) erfasst werden und wobei abhängig von mit den vom optischen Sensor (2) ausgegebenen Ortskoordinaten (x, y) oder realen Ortsgrößen das Lastaufnahmemittel (5) an den Regalen (8) positioniert wird.

4. Sensoranordnung (1) nach Anspruch 3, **dadurch gekennzeichnet, dass** die Marken (3) von geometrischen Strukturen an den Regalen (8) gebildet sind.

5. Sensoranordnung (1) nach Anspruch 4, **dadurch gekennzeichnet, dass** die geometrischen Strukturen Reflektoren oder Löcher sind.

6. Sensoranordnung (1) nach einem der Ansprüche 1 bis 5, **dadurch gekennzeichnet, dass** das Machine-Learning-Modell (16) wenigstens ein neuronales Netz aufweist, welches in einem Einlernbetrieb mit Trainingsdaten trainiert wird.

7. Sensoranordnung (1) nach Anspruch 6, **dadurch gekennzeichnet, dass** die Trainingsdaten Eingangsdaten in Form von mit dem optischen Sensor (2) gemessenen Bildern oder simulierten Bildern und Soll-Ausgangsdaten enthalten, und dass das Training durch eine zu minimierende Verlustfunktion erfolgt.

8. Sensoranordnung (1) nach einem der Ansprüche 6 oder 7, **dadurch gekennzeichnet, dass** das Machine-Learning-Modell (16) ein neuronales Netz aufweist, das für mehrere unterschiedliche Marken (3) trainiert wird.

9. Sensoranordnung (1) nach einem der Ansprüche 6 oder 7, **dadurch gekennzeichnet, dass** das Machine-Learning-Modell (16) mehrere neuronale Netze aufweist, die für unterschiedliche Marken (3) trainiert werden, und dass die einzelnen neuronalen Netze in der Auswerteeinheit (15) abgespeichert und auswählbar sind.

10. Sensoranordnung (1) nach einem der Ansprüche 6 bis 11, **dadurch gekennzeichnet, dass** das Machine-Learning-Modell (16) eine Netzstruktur von neuronalen Netzen umfasst.

11. Sensoranordnung (1) nach Anspruch 10, **dadurch gekennzeichnet, dass** die Netzstruktur ein CNN (17) (convolutional neuronal network) und ein FCN (18) (fully connected network) aufweist.

12. Sensoranordnung (1) nach Anspruch 10, **dadurch gekennzeichnet, dass** die Netzstruktur zwei in einer Reihenanordnung angeordnete CNN (17a, 17b) aufweist, wobei der Ausgang des zweiten CNN (17b) auf einen Entscheider (19) geführt ist.

13. Sensoranordnung (1) nach Anspruch 10, **dadurch gekennzeichnet, dass** die Netzstruktur ein erstes CNN (17a) aufweist, wobei ein erster Ausgang des ersten CNN (17a) auf ein zweites CNN (17b) geführt ist, dessen Ausgang auf eine DSTN-Schicht (20) (differentiable spatio-transform neural network) geführt ist, und wobei ein zweiter Ausgang des ersten CNN (17a) auf ein FCN (18) geführt ist.

14. Sensoranordnung (1) nach einem der Ansprüche 1 bis 13, **dadurch gekennzeichnet, dass** das oder jedes Machine-Learning-Modell (16) in Form von Softwaremodulen ausgebildet ist, und dass die Auswerteeinheit (15) eine an die Machine-Learning-Modelle (16) angepasste Prozessorstruktur aufweist.

15. Verfahren zum Betrieb einer Sensoranordnung (1) mit einem optischen Sensor (2), der als Empfänger einen Bildsensor (12) aufweist, wobei mit dem optischen Sensor (2) Marken (3) erfasst werden, die relativ zum optischen Sensor (2) beweglich angeordnet sind, wobei mit dem optischen Sensor (2) eine Positionsbestimmung einer von dieser erfassten Marke (3) durchgeführt wird, **dadurch gekennzeichnet, dass** der optische Sensor (2) eine Auswerteeinheit (15) aufweist, in welchem wenigstens ein Machine-Learning-Modell (16) vorhanden ist, mittels dessen eine in einem Bild des Bildsensors (12) vorhandene Marke (3) identifiziert wird und die Lage der Marke (3) innerhalb des Bildes bestimmt wird, und wobei die Lage der erfassten Marke (3) innerhalb des Bildes in der Auswerteeinheit (15) in Ortskoordinaten (x, y) umgerechnet wird, und dass die Ortskoordinaten (x, y) oder reale Ortsgrößen vom optischen Sensor (2) als Ausgangsgrößen an eine externe Einheit ausgegeben werden.
